(19) Europäisches Patentamt
European Patent Office
Office européen des brevets

(11) **EP 2 909 299 B1**

(12) **EUROPEAN PATENT SPECIFICATION**

(45) Date of publication and mention
of the grant of the patent:
**30.11.2016 Bulletin 2016/48**

(21) Application number: **13824221.9**

(22) Date of filing: **17.10.2013**

(51) Int Cl.:
***B01J 13/00*** *(2006.01)*

(86) International application number:
**PCT/US2013/065345**

(87) International publication number:
**WO 2014/062866 (24.04.2014 Gazette 2014/17)**

(54) **SHAPE-CHANGING DROPLET**

FORMVERÄNDERNDE TRÖPFCHEN

GOUTTELETTE CAPABLE DE CHANGER DE FORME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2012 US 201261715080 P**

(43) Date of publication of application:
**26.08.2015 Bulletin 2015/35**

(73) Proprietor: **The Procter & Gamble Company
Cincinnati, OH 45202 (US)**

(72) Inventors:
• **SPICER, Patrick Thomas
Cincinnati, Ohio 45202 (US)**
• **CAGGIONI, Marco
Cincinnati, Ohio 45202 (US)**
• **LENIS-ABRILI, Jessica
Cincinnati, Ohio 45202 (US)**
• **BAYLES, Alexandra Victoria
Newark, Delaware 19711 (US)**

(74) Representative: **Siddiquee, Sanaul Kabir
N.V. Procter & Gamble
Services Company S.A.
Temselaan 100
1853 Strombeek-Bever (BE)**

(56) References cited:
**US-A1- 2002 160 928      US-A1- 2005 000 028
US-A1- 2010 150 975**

## Description

FIELD OF THE INVENTION

The present invention relates to shape-changing droplets, compositions comprising said droplets, methods of depositing benefit agents onto substrates using said droplets, and methods of making said droplets.

BACKGROUND OF THE INVENTION

Benefit agents, such as perfumes, enzymes and the like are often delivered to a substrate in the form of a droplet or particle. Such delivery can be achieved by using a liquid droplet which can exist within another liquid or within the air as an aerosol, for example. US 2005/0000028 A1 discloses a method for deposition of fabric care active onto a fabric article. Another method is via a loaded solid carrier material such as zeolite or starch. In this case the benefit agent usually exists as a liquid which is applied to the carrier material and is absorbed within the solid particle. A final approach is via core-shell particles, in which the benefit agent is a component of a liquid core which is surrounded by a solid shell. However, there are a number of problems encountered when using these known methods.

Loaded carrier materials and core-shell particles suffer from two issues. The first is the ability to attach to the substrate. Attachment often relies upon attractive forces such as charge attraction between the solid carrier or shell material and the substrate. If the surface has a charge that is similar to that of the carrier material outer surface then attachment is unlikely. Secondly, even if attachment to the substrate should be successful, movement of the benefit agent from the carrier material or through the shell to the substrate can be problematic. This is because the solid material is attached to the substrate, and so the liquid absorbed into the carrier material or within the shell may not be able to easily transfer as it is not in direct contact with the substrate.

Liquid droplets overcome some of the disadvantages of these other particles. Firstly, since they are liquid, they can attach to the substrate without the same requirement as for solid particles, such as charge attraction, etc. Attachment is facilitated by liquid-solid attachment, i.e. 'wetting'. Wetting' is essentially the extent to which a liquid can wet a solid, and is a function of the force of adhesion between a liquid and a solid. This type of adhesion is evident, for example, when droplets of a liquid form on a solid surface, e.g. water droplets on glass. Furthermore, the ability of the benefit agent to reach the substrate surface will also be improved. This is because when the droplet adheres to the substrate, the benefit agent can easily pass through the liquid and directly to the substrate surface. However, liquid droplets tend to be spherical. This results in a low surface area for initial contact to the substrate, especially if the substrate presents a low surface area to the droplet itself, such as a natural fiber (examples being hair or cotton fiber) or a synthetic fiber (examples being nylon or polypropylene). Hence, longevity of attachment tends to be problematic. This problem can be overcome by forming non-spherical liquid droplets, which comprise an internal solid material that defines the overall shape of the non-spherical droplet.

However, once attached, and following delivery of the benefit agent, it is often required that the liquid droplet de-attaches from the substrate. This can be problematic when attraction to the substrate is strong.

Alternatively, it is sometimes required that the liquid droplet has low attraction to other materials present until it reaches the target substrate, thereafter exhibiting high attraction to the substrate.

Thus, there remains a need in the art for a method of delivering a benefit agent to a substrate via a carrier in which the carrier can vary its ability to be attracted to the substrate.

It has now been surprisingly found that the method according to the present invention overcomes this problem.

SUMMARY OF THE INVENTION

A first aspect of the present invention is a method of changing the shape of a liquid droplet in an external liquid wherein the liquid droplet has an aspect ratio and the shape change is defined as at least a 10% increase or decrease in the aspect ratio in at least one orientation, wherein the droplet comprises;

    a) a liquid;
    b) an internal solid material, the internal solid material defining the shape of the droplet; and
    c) a benefit agent;

wherein the three-phase contact angle of the liquid on the internal solid material is less than 1 °; and wherein, the liquid droplet has a yield stress of between 100 and 1,000,000 Pascals when measured at 25°C; the liquid droplet has an interfacial tension with the external liquid, and the solid material exerts a yield stress which matches or exceeds the pressure exerted by the interfacial tension.

The method comprises the step of: changing the interfacial tension, or changing the yield stress, or a combination of both.

A second aspect is a method for making a droplet according to the present invention, comprising the steps of;

    i) mixing a first liquid composition comprising a molten ingredient having a yield stress of between 100 and 1,000,000 Pascals, the yield stress being measured at a temperature of 25° C and a second liquid and a benefit agent, wherein the first and second liquids and benefit agent are mixed at a temperature above 50°C to make a liquid droplet premix;
ii) preparing a channel, wherein the channel optionally comprises a third liquid, the third liquid being immiscible with the second liquid, and wherein the third liquid is flowing through the channel;
iii) drawing individual droplets of the liquid droplet premix into the channel;
iv) passing the premix droplets into the channel at a temperature of 50°C or below so that the first liquid solidifies to produce liquid droplets; and
v) depositing the liquid droplets into a composition comprising the third liquid, the third liquid being immiscible with the second liquid.

## BRIEF DESCRIPTION OF THE DRAWINGS

FIG. 1 discloses examples of two-dimensional projections of three-dimensional non-spherical liquid droplets.
FIG. 2A depicts three phase contact angle measurement.
FIG. 2B depicts three phase contact angle measurement.
FIG. 2C depicts three phase contact angle measurement.

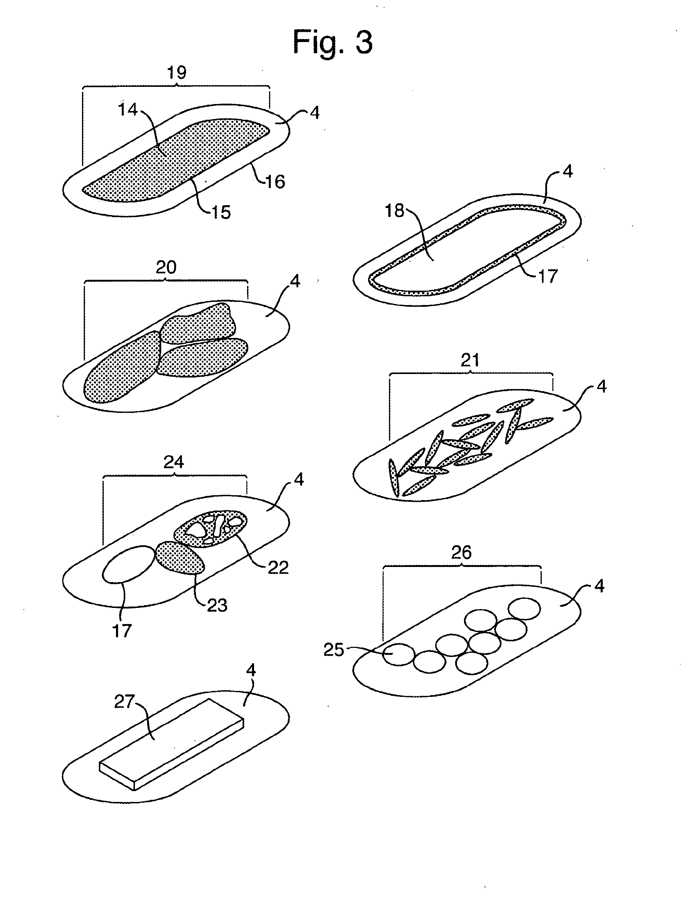

FIG. 3 discloses non-spherical droplets according to the present invention.
FIG. 4 discloses an exemplary droplet shape making means.

## DETAILED DESCRIPTION OF THE INVENTION

### Method of changing the shape of a liquid droplet

The present invention is to a method of changing the shape of a liquid droplet in an external liquid wherein the liquid droplet has an aspect ratio and the shape change is defined as at least a 10% increase or decrease in the aspect ratio in at least one orientation, wherein the droplet comprises;

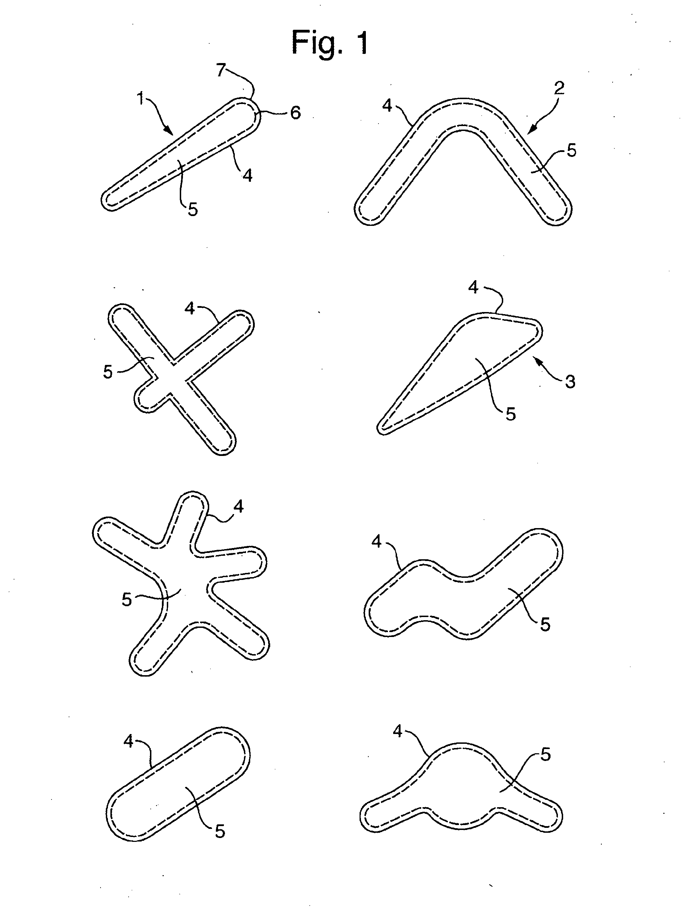

a) a liquid;
b) an internal solid material, the internal solid material defining the shape of the liquid droplet; and
c) a benefit agent;

wherein the liquid has a three-phase contact angle on the internal solid material and the three-phase contact angle is less than 1°; the liquid droplet has a yield stress of between 100 and 1,000,000 Pascals, or even between 5000 and 10,000 Pascal, when measured at 25°C; and the droplet has an interfacial tension with the external liquid, and the solid material exerts a yield stress which matches or exceeds the pressure exerted by the interfacial tension;
comprising the step of: changing the interfacial tension, or changing the yield stress, or a combination of both.
Alternatively, the method could comprise the step of increasing the interfacial tension, or decreasing the yield stress, or a combination of both. Alternatively, the method could comprise the step of decreasing the interfacial tension, or increasing the yield stress, or a combination of both.
The liquid droplet in the present method is within an external liquid. The liquid droplet is immiscible with the external liquid. The external liquid could be a hydrophilic liquid such as an aqueous liquid or an oleophilic liquid such as an oil. If the external liquid is an aqueous liquid, then the droplet liquid is an oil. Alternatively, if the external liquid is an oil, then the droplet liquid is an aqueous liquid. The external liquid is described in more detail below.
A liquid droplet (1) is understood to mean a droplet in which the entire outer surface of the droplet is liquid (4). Even if the droplet also comprises a solid component (5), to be a liquid droplet the solid component must be completely enclosed within the liquid part of the droplet (4). The distance between any point on the surface of the internal solid material (6) and the outer edge of liquid droplet (7) may be at least 10 nanometers, or even at least 100 nanometers, or even at least 1 micron.
The liquid droplet may be spherical or non-spherical. By spherical liquid droplet is meant a droplet in which every point on its surface is equidistant from its centre. It should be understood that the term 'equidistant' includes a standard degree of error of +/- 2%. A non-spherical liquid droplet is a droplet that has any shape which is not spherical. Without wishing to be bound by theory, non-spherical liquid droplets are advantageous because they exhibit excellent attachment to the substrate due to the wetting effect of the liquid, but also exhibit excellent adherence to the substrate because of the large surface area of the non-spherical droplet. The non-spherical liquid droplet may be any non-spherical shape. A number of non-limiting examples can be seen in FIG. 1. The diagrams in FIG. 1 represent two-dimensional projections of three-dimensional non-spherical liquid droplets. Here the projected area is taken to mean the area of a two-dimensional projection of a three-dimensional object onto a flat plane such as an image provided when viewing a microscope slide where a 3D object is placed upon the slide, or a 3D object is sandwiched between a slide and a coverslip. The non-spherical droplet may be rod shaped (1). Alternatively, it may have an elongated, yet curved shape (2) or even a triangular or wedge shape (3).
The shape change is defined as at least a 10% increase or decrease in the aspect ratio in at least one orientation. In one aspect, the liquid droplet may have an aspect ratio of 1.0 prior to shape change. The liquid droplet may have at least one orientation having an aspect ratio of greater than 1.0, or even greater than or equal to 1.5 or even greater than or equal to 2.0, or even greater than or equal to 10 or even greater than or equal to 100 prior to shape change. The aspect ratio may be no greater than 200, or even no greater than 175, or even no greater than 150 prior to shape change. By 'orientation' we herein mean the two-dimensional projected area of a three-dimensional shape when viewed from any given point. A three-dimensional shape will present different orientations depending upon the angle or point from which it is viewed. Thus, at least one of these orientations must have an aspect ratio of at least 1.0. This means that from a different orientation, or orientations, the same liquid droplet may have an aspect ratio of 1.0 or less. Without wishing to be bound by theory, the aspect ratio is determined by assigning a major and minor axis to the projection of the liquid droplet. Here the projected area is taken to mean the area of a two-dimensional projection of a three-dimensional object onto a flat plane such as a microscope slide. This is achieved by fitting an artificial bounding rectangle to the projection of the liquid droplet, where the rectangle dimensions determine each axis value. The aspect ratio is then determined as the ratio of length of the major to minor axis. A sphere has an aspect ratio of 1.0. An exemplary method of determining the aspect ratio is described in more detail below.

The liquid can be any suitable liquid. The liquid could be an oil or an aqueous liquid. Suitable liquids are described in more detail below. It should be noted that the materials used in the liquid, the internal solid material and the benefit agent are all different from one other. For example the liquid in the droplet and the benefit agent are not the same substance. The material used for the internal solid material and droplet liquid can be derived from the same source, for example both may be fatty alcohols, but at room temperature the fatty alcohol in the liquid is liquid and the fatty alcohol in the solid is solid. Hence, in this particular example, they will be different in terms of melting point.

The internal solid material can be any suitable solid material. The internal solid material can be porous or non-porous. Suitable internal solid materials are detailed below. The internal solid material may comprise at least 5%, or even at least 10%, or even at least 20%, or even at least 50% by volume of the droplet. The internal solid material may comprise at most 95% by volume of the liquid droplet. The person skilled in the art would know how to determine the percentage using known techniques.

The internal solid material defines the shape of the liquid droplet. The internal solid material may be spherical or non-spherical. When the liquid droplet is spherical, the internal solid material will be spherical.

The liquid droplet comprises a benefit agent. A benefit agent is defined as a compound or ingredient that imparts a benefit, for example cleaning, coating, substrate restoration, colour change, reduced coefficient of friction or water repellency, sensorial, biological agents including enzymes, probiotics and prebiotics, medicament, nutraceutical or combinations thereof. The benefit agent is described in more detail below.

The liquid droplet has a three phase contact angle of the droplet liquid on the internal solid material of less than 1°, a condition termed complete wetting. 'Wettability' is essentially the extent to which a liquid can wet a solid, and is a function of the force of adhesion between a liquid and a solid. Wetting is a fundamental physical property of a solid-liquid combination. In naturally non-wetting, or low wettability situations, wetting agents such as surfactants, polymers, or colloids can be added to modify a fluid's or solid's properties to allow wetting, between the two, that would not occur without additives. In the context of the present invention, the surface of the internal solid material is completely wetted by the droplet liquid, in other words, the surface of the internal solid material is not in contact with the environment external to the liquid droplet. Only the outer surface of the liquid part of the liquid droplet is in contact with the external environment.

Without wishing to be bound by theory, the three-phase contact angle is a measure of the capacity of the liquid to remain around the internal solid material and not dissociate from it. In a liquid external environment if the liquid component of the droplet does not completely wet the internal solid material, in order to achieve equilibrium, the droplet liquid may dissociate from the solid, and independently form a liquid droplet in the external liquid. If the three-phase contact angle of the droplet liquid component is less than 1° on the internal solid material within a volume of external liquid material then liquid remains around the internal solid material rather than dissociating from it.

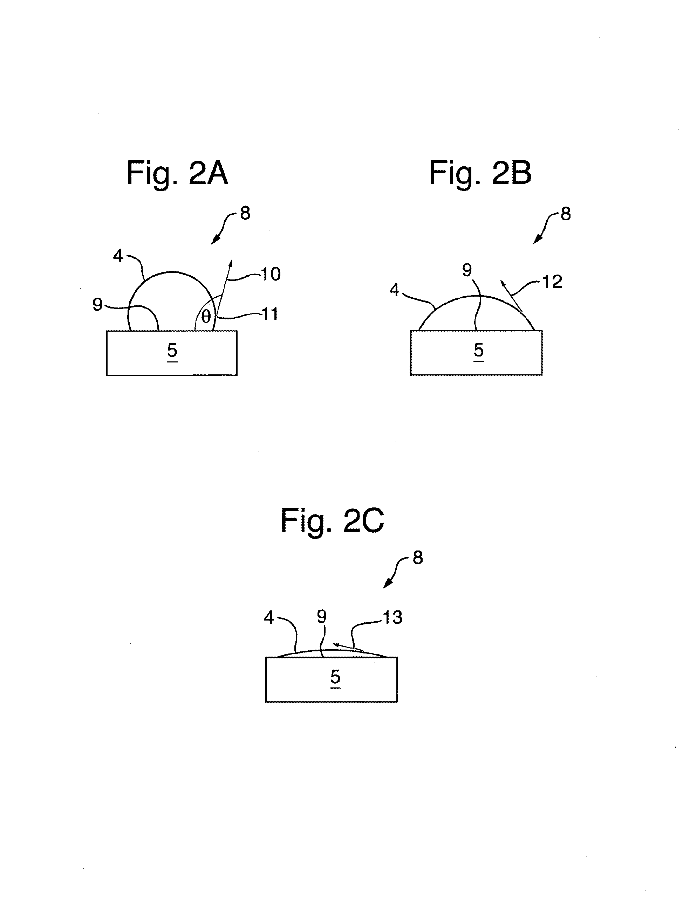

FIG. 2A, 2B, and 2C detail the three-phase contact angle measurement. The three-phase contact angle is measured by placing a sample of the internal solid material (5) into a sample of external liquid material (8). Next a droplet of a second liquid (4) which is immiscible with the external liquid material (i.e. droplet liquid) is placed on the solid surface (9). The contact angle (10) is then measured as a tangent from the internal solid material surface (9) along the edge of the droplet (11), as shown in FIG. 2A. Increasing 'wettability' of the internal solid material by the droplet liquid material leads to a decreasing contact angle (12) (FIG. 2B) until total wetting is seen at very low angles (13) (FIG. 2C). Increased wetting means that the droplet liquid material preferably remains associated with the internal solid material rather than dissociating from it. The method for determining the three-phase contact angle is described in more detail below.

The liquid droplet has a yield stress of between 100 Pascal and 100,000 Pascal, or even between 1000 Pascal and 10,000 Pascal. The yield stress of the liquid droplet is measured at a temperature of 25 °C. Without wishing to be bound by theory, the yield stress is a measure of the rheology of the liquid droplet. The yield stress is the point at which the liquid droplet, comprising both liquid and internal solid material, goes from being in a non-flowable state to a flowable state. The method for determining the yield stress is described in more detail below.

The liquid droplet has an interfacial tension with the external liquid. Without wishing to be bound by theory, the interfacial tension is the tension at the surface separating two separate immiscible liquids.

A liquid droplet that does not comprise an internal solid material that defines the shape will seek to form a sphere because of the pressure exerted by its interfacial tension, y, with any external fluid within which it exists (as in an emulsion, for example). The pressure exerted by the interfacial tension can be offset by an internal structure, such as an internal solid material, within the droplet, when the yield stress of the internal solid material matches or exceeds the pressure exerted by the interfacial tension, allowing the droplet to stably preserve a non-spherical shape. The deformed liquid droplet will remain stable as long as the force balance does not change. If the pressure exerted by the interfacial tension is increased, for example by dilution of the external liquid with a diluent, for example water, so as to exceed the yield stress of the droplet containing the internal solid material, the droplet's internal structure will fail or yield and the droplet will transform into a more compact shape, such as a sphere.

Similarly, the balance may be shifted if the yield stress of the droplet containing internal solid material is decreased, for example by heating to soften or melt the internal solid material while maintaining the same/similar pressure exerted by the interfacial tension. Other diluents can include an aqueous solution of surfactant, or an aqueous dispersion of colloids or mixtures thereof. Without wishing to be bound by theory, the yield stress of the internal solid material contributes to the overall yield stress of the liquid droplet. Hence the internal solid material contributes to resisting deformation of the overall liquid droplet. It should be noted that the yield stress of the internal solid material will always be greater than that of the yield stress of the complete liquid droplet (comprising the internal solid material). The method for determining the yield stress is described in more detail below.

Without wishing to be bound by theory, when the yield stress exerted by the internal solid material matches or exceeds the interfacial tension, then the liquid droplet maintains its shape.

The method of the present invention comprises the step of changing the interfacial tension, or changing the yield stress or a combination of both. Alternatively, the method could comprise the step of increasing the interfacial tension, or decreasing the yield stress or a combination of both. In this case, the liquid droplet would change from a non-spherical shape to a spherical shape, and the aspect ratio would decrease. Without wishing to be bound by theory, going from a non-spherical shape to a spherical shape could decrease the surface area of the liquid droplet in contact with the substrate and so decrease the attraction of the liquid droplet to the substrate. Without wishing to be bound by theory, when the interfacial tension is increased or the yield stress is decreased, this shifts the balance of these two forces and so the liquid droplet changes shape to re-achieve balance of the forces. Thus, the liquid droplet may change from a non-spherical shape to a spherical shape. Alternatively, the method could comprise the step of decreasing the interfacial tension, or increasing the yield stress or a combination of both. In this case the liquid droplet would change from a spherical shape to a non-spherical shape, and the aspect ratio would increase. Without wishing to be bound by theory, going from a spherical shape to a non-spherical shape could increase the surface area of the liquid droplet in contact with the substrate and so increase the attraction of the liquid droplet to the substrate.

Changes in yield stress can be conditional or effect a fundamental change in material property. Yield stress as used in the context of the present invention is 'material property' yield stress and is expressed as yield stress as measured at a given temperature such as 25°C. For example, for a given droplet with an unchanged yield stress at 25°C material property, the yield stress of the droplet may decrease with an increase in temperature, thus reducing its resistance pressure which if reduced below the pressure exerted by the external liquid, such as interfacial tension, can lead to droplet shape change. Conditional yield stress is situational.

The yield stress of the internal solid material may be increased or decreased by changing the temperature. The yield stress of the internal solid material may be decreased by increasing the temperature. The temperature may be increased to above 50°C.

The yield stress, of the internal solid material may be increased by causing the densification of the internal solid material structure, for example by application of vibratory stresses. The yield stress of the internal solid material may also be decreased by application of ultrasonic energy, either in bulk or focused , or by application of electromagnetic energy, in bulk or focused such as by use of a laser device, on all or specific parts of the solid material. The addition of energy may increase the temperature or may induce a partial or complete phase change from solid to a melt or a liquid. In the case of sound energy such as ultrasound, it may additionally act on the solid in a manner to cause internal physical disruption of the integrity of the solid internal material up to possible shattering into multiple pieces.

The external liquid environment may change which may then change the pressure, such as interfacial tension, hydrostatic or hydrodynamic pressures. Example changes in the external liquid environment can include temperature, density, pH, pressure, fluid flow, fluid shear, addition or concentration or dilution of one or more external liquid chemical components or a combination thereof. An example of a liquid chemical component change is the addition or dilution of a surfactant that influences the interfacial tension.

Changes in the external environment may cause changes in the yield stress of the liquid droplet including changing the yield stress of the internal solid material and/or the droplet liquid. Examples include change of temperature or pH. Another is the passing of one or more chemical compounds into or from the liquid droplet, wherein the change of chemical composition of the liquid droplet can change the yield stress. The change in chemical composition may also be associated with other effects such as a change in pH.

The interfacial tension may be either increased or decreased, if a surfactant is present in the external liquid, by the addition of a polymer, colloid, or other surfactant that displaces the first surfactant from its position at the droplet-external liquid interface. The interfacial tension may be increased by attachment of the liquid droplet to a substrate. Attachment to a substrate may increase the interfacial tension and allow the liquid droplet to wrap around the substrate, for example wrap around a hair or fabric fibre. In this case the liquid droplet may change from a spherical or a non-spherical shape to a shape which wraps, in part or whole, around the substrate. In this case the liquid droplet's aspect ratio is increased when moving from a sphere to a shape that wraps around the substrate, but decrease when a rod shape for example wraps around the substrate. Preferably, the liquid droplet changes from a rod shape into a more curved or more twisted or helical shape. Or the liquid droplet changes from a curved shape into a helical shape.

The liquid droplet may change shape a first time upon a change in interfacial tension or a change in yield stress or both, and then change shape for a second time upon a subsequent change in interfacial tension or yield stress or both. The liquid droplet may change shape more than two times.

The liquid droplet may change shape from a sphere to an elongated shape such as a rod or ellipsoid for example. Or, the liquid droplet may change shape from an elongated shape to a spherical shape, or a less elongated shape. Or, the liquid droplet may change shape from a spherical, or an elongated shape to a helical shape. The liquid droplet may have a shape comprising multiple arms or branches, such as an 'x' or starfish shape, in which the arms or branches wrap around the substrate.

Without wishing to be bound by theory, once deposited on a substrate it is sometimes desirable for the droplet to remain attached even in extreme flow conditions, like that of a washing machine or shower rinse. In such flows, convective fluid shear stresses can detach the majority of the droplet volume because it extends above the surface of the substrate or is exposed to the flow in a single direction. It is thus desirable to either increase the contact area between the droplet and the substrate, or to make the attachment multi-directional, for example by wrapping the droplet around the substrate, i.e. helical shape.

## The external liquid

Suitable external liquids can include water, aqueous liquid comprising water or an aqueous solution of surfactant or an aqueous dispersion of colloidal particles or an aqueous solution of polymer. The external liquid may be a consumer goods product such as a fully formulated consumer goods product, for example a liquid detergent, or a hand soap. Alternatively, the external liquid may be a component of a consumer goods product which is then added to the fully formulated consumer goods product. Alternatively the external liquid could be a liquor prepared by the consumer, for example a fabric wash liquor. The external liquid may be a fabric care, home care or beauty care composition. The external liquid may also comprise adjunct materials other than the liquid droplets. The adjunct material may be the same or different to the benefit agent in the liquid droplet. Adjunct materials can include transition metal catalysts; imine bleach boosters; enzymes such as amylases, carbohydrases, cellulases, lactases, lipases, bleaching enzymes such as oxidases and peroxidases, proteases, pectate lysases and mannanases; source of peroxygen; bleach activator such as tetraacetyl ethylene diamine, oxybenzene sulphonate bleach activators such as nonanoyl oxybenzene sulphonate, caprolactam bleach activators, imide bleach activators such as N-nonanoyl-N-methyl acetamide, preformed peracids such as N,N-pthaloylamino peroxycaproic acid, nonylamido peroxyadipic acid or dibenzoyl peroxide; suds suppressing systems such as silicone based suds suppressors; brighteners; hueing agents; photobleach; fabric-softening agents such as clay, silicone and/or quaternary ammonium compounds; flocculants such as polyethylene oxide; dye transfer inhibitors such as polyvinylpyrrolidone, poly 4-vinylpyridine N-oxide and/or co-polymer of vinylpyrrolidone and vinylimidazole; fabric integrity components such as oligomers produced by the condensation of imidazole and epichlorhydrin; soil dispersants and soil anti-redeposition aids such as alkoxylated polyamines and ethoxylated ethyleneimine polymers; anti-redeposition components such as polyesters and/or terephthalate polymers, polyethylene glycol including polyethylene glycol substituted with vinyl alcohol and/or vinyl acetate pendant groups; perfumes; cellulosic polymers such as methyl cellulose, carboxymethyl cellulose, hydroxyethoxycellulose, or other alkyl or alkylalkoxy cellulose, and hydrophobically modified cellulose; carboxylic acid and/or salts thereof, including citric acid and/or sodium citrate; and any combination thereof.

## The liquid droplet

The liquid droplet may have a volume of 1 ml or less. By 'volume' we herein mean the space occupied by the liquid droplet. The liquid droplet may have a volume of 0.8 ml or less, or even 0.6 ml or less. The liquid droplet may have a volume of at least 0.5 picoliters, or even 4 picoliters or even 35 picoliters.

The liquid droplet may have at least one orientation having a circularity of less than 0.9, or even less than 0.8, or even less than 0.7. "Orientation" as used herein means the two-dimensional projected area of a three-dimensional shape when viewed from any given point. A three-dimensional shape will present different orientations depending upon the angle or point from which it is viewed. Thus, at least one of these orientations must have a circularity of less than 0.9. This means that from a different orientation, or orientations, the same liquid droplet may have a circularity of greater than 0.9. The circularity may be at least 0.1, or even 0.2, or even 0.3. Without wishing to be bound by theory, a perfect circle has a circularity of 1.0 Circularity is a non-unit value of the two-dimensional projected area of a particle multiplied by $4\pi$, and then divided by the square of the projected perimeter of the particle;

$$Circularity = \frac{4\pi * Area}{Perimeter^2}$$

Here the projected area is taken to mean the area of a two-dimensional projection of a three-dimensional object onto a flat plane such as an image provided when viewing a microscope slide where a 3D object is placed upon the slide, or a 3D object is sandwiched between a slide and a coverslip. Those skilled in the art would know how to determine the circularity of the projection using standard equipment and techniques known in the art. An exemplary test method is detailed below.

Other droplets

In one embodiment, the liquid droplet of the present invention may comprise a liquid; and an internal solid material, the internal solid material defining the shape of the droplet; and wherein the liquid or the internal solid material, or both comprise a benefit agent; and wherein the three-phase contact angle of the liquid on the internal solid material is less than about 1°; and wherein, the liquid droplet has a yield stress of between about 100 Pascal and about 100,000 Pascal, when measured at about 25°C; and wherein, the liquid and the internal solid material are chemically distinct from one another. By "chemically distinct" is meant that the liquid and the internal solid material have different chemistries, for example different chemical species or compounds.

In one aspect, the non-spherical liquid droplet could be a liquid droplet comprising a liquid; and an internal solid material, the internal solid material defining the shape of the droplet; and wherein the three-phase contact angle of the liquid on the internal solid material is less than about 1°; and wherein the liquid droplet has a yield stress of between about 100 Pascal and about 1,000,000 Pascal, when measured at about 25°C; and wherein the droplet comprises at least 10 weight percent inorganic material; and wherein the droplet comprises at least 1 weight percent of a benefit agent.

The droplet may comprise from 20, or even 30, or even 40, or even 50, or even 60, or even 70, or even 80, or even 90, or even up to 100 weight percent inorganic material.

The droplet may comprise from 5, or even 10, or even 20, or even 30, or even 40, or even 50, or even 60, or even 70, or even 80, or even 90, or even up to 100 weight percent benefit agent.

The liquid may comprise inorganic material. Alternatively the internal solid material may comprise inorganic material. Alternatively, both the droplet liquid and the internal solid material may comprise inorganic material. When present in both, the weight percent of inorganic material comprising the liquid and the solid internal material may be the same or may differ.

The droplet may comprise various materials comprising in part or whole the droplet's liquid and internal solid material. One or more of the materials comprising the liquid may be comprised of one or more benefit agents comprising up to 100 weight percent of the liquid of the droplet. One or more of the materials comprising the internal solid may be comprised of one or more benefit agents comprising up to 100 weight percent of the liquid of the droplet.

The inorganic material may comprise inorganic polymers.

By "inorganic materials" it is meant all substances except hydrocarbons and their derivatives, or all substances that are not compounds of carbon, with the exception of carbon oxides, and carbon sulfide. Suitable inorganic materials may include calcium and zinc salts, zinc oxide, zinc pyrithione calcium-based compounds, bismuth compounds, clays, water, or mixtures thereof. Suitable calcium-based compounds include calcium carbonate. Suitable clays can include laponites, kaolinitie, montmorillonite, atapulgite, illite, bentonite, halloysite and mixtures thereof. Inorganic polymers are polymers in which the main chain contains no.carbon atoms. Suitable inorganic polymers include polysilanes, polygermanes, polystannanes, polysulfides; and heterochain polymers with more than one type of atom in the main chain such as polyborazylenes, polysiloxanes like polydimethylsiloxane (PDMS), polymethylhydrosiloxane (PMHS) and polydiphenylsiloxane, polysilazanes like perhydridopolysilazane (PHPS), polyphosphazenes, polythiazyls and mixtures thereof. In one embodiment, the non-spherical liquid droplet may comprise a liquid; and an internal solid material, the internal solid material defining the shape of the droplet; and wherein the three-phase contact angle of the liquid on the internal solid material is less than about 1°; and wherein the liquid droplet has a yield stress of between about 100 Pascal and about 1,000,000 Pascal, when measured at about 25°C; and wherein the droplet comprises at least 10 weight percent in total from the group of organo-compounds, synthetic organic polymers, and semisynthetic organic polymers; and wherein the droplet comprises at least 1 weight percent of a benefit agent.

The droplet may comprise from 20, or even 30, or even 40, or even 50, or even 60, or even 70, or even 80, or even 90, or even up to 100 weight percent organo-compounds, synthetic organic polymers, semisynthetic organic polymers, or mixtures thereof.

The droplet may comprise from 5, or even 10, or even 20, or even 30, or even 40, or even 50, or even 60, or even 70, or even 80, or even 90, or even up to 100 weight percent benefit agent.

The droplet liquid may comprise from 5, or even 10, or even 20, or even 30, or even 40, or even 50, or even 60, or even 70, or even 80, or even 90, or even up to 100 weight percent benefit agent.

The droplet liquid, the internal solid material or a combination thereof may comprise organo-compounds, synthetic organic polymers, semisynthetic organic polymers, or a mixture thereof.

The droplet may comprise at least 1, or even 2, or even 5, or even 10, or even 20, or even 30, or even 40, or even 50, or even 60, or even 70, or even 80, or even 90, or even 100 weight percent organo-compound material. The droplet may comprise at least 1, or even 2, or even 3, or even 4, or even 5, or even 10, or even 20, or even 30, or even 40, or even 50, or even 60, or even 70, or even 80, or even 90, or even 100 weight percent of a benefit agent. Organo-compound material is an organic compound to which one or more non-oxygen hetero-atoms replace one or more carbon atoms in a hydrocarbon chain of an organic material and/or acts in the stead of a carbon atom in an otherwise hydrocarbon chain of an organic material. Example organo compounds, including polymeric forms, include: thio-compounds (also known as sulfur-containing organo compounds such as thiols, sulfides, and disulfides); phosphorous-containing compounds (such as phosphines and phosphoniums); nitrogen-containing compounds (such as amines and ammonium); organosilicon compounds (such as silanes, silyl halides, silanols, siloxanes, alkoxysilanes, silizanes, and polydimethylsiloxane); organoboron compounds (such as boranes); organometallic compounds; organoclay (also known as organopolysilicate) compounds such as kaolin or montmorillonite to which an organic structure has been chemically bonded; organotin compounds; organozinc compounds; and mixtures thereof. The organo-compound material may be comprised of one or more organo compounds.

The droplet may comprise at least 1, or even 2, or even 5, or even 10, or even 20, or even 30, or even 40, or even 50, or even 60, or even 70, or even 80, or even 90, or even 100 weight percent of a synthetic, organic polymer or a semisynthetic organic polymer. Semisynthetic involves additional actions beyond hydrogenating a natural polymer to increase its degree of saturation.

Synthetic organic polymer materials include thermoplastics such as Acrylonitrile butadiene styrene (ABS), Acrylic, Celluloid, Cellulose acetate, Ethylene-Vinyl Acetate (EVA), Ethylene vinyl alcohol (EVAL), Fluoroplastics (PTFEs, including FEP, PFA, CTFE, ECTFE, ETFE), Ionomers, acrylic/PVC alloy (such as Kydex, a trademarked product), Liquid Crystal Polymer (LCP), Polyacetal (POM or Acetal), Polyacrylates (Acrylic), Polyacrylonitrile (PAN or Acrylonitrile), Polyamide (PA or Nylon), Polyamide-imide (PAI), Polyaryletherketone (PAEK or Ketone), Polybutadiene (PBD), Polybutylene (PB), Polybutylene terephthalate (PBT), Polyethylene terephthalate (PET), Polycyclohexylene dimethylene terephthalate (PCT), Polycarbonate (PC), Polyhydroxyalkanoates (PHAs), Polyketone (PK), Polyester, Polyethylene (PE) including low density (LDPE) and high density (HDPE) versions, Polyetheretherketone (PEEK), Polyetherimide (PEI), Polyethersulfone (PES), Polysulfone, Polyethylenechlorinates (PEC), Polyimide (PI), Polylactic acid (PLA), Polymethylpentene (PMP), Polyphenylene oxide (PPO), Polyphenylene sulfide (PPS), Polyphthalamide (PPA), Polypropylene (PP), Polystyrene (PS), Polysulfone (PSU), Polyvinyl chloride (PVC), Polyvinylidene chloride (PVDC), Fluoropolymer (e.g., Spectralon), or mixtures thereof. Semisynthetic organic polymer materials include cross-linked thermosets such as those involving epoxy, phenol formaldehyde, urea formaldehyde, phenolics, alkyds, amino resins, polyesters, epoxides, silicones, proteins; other cross-linked materials such as natural and synthetic rubbers (which may be cured, for example, via vulcanization); and mixtures thereof. Semisynthetic organic polymer materials include cellulosics (such as cellulose gum, cellulose triacetate, nitrocellulose, rayon, cellophane and other modified celluloses), and modified starches (including those that have been physically treated, enzymatically treated, or chemically treated, such as by acetylation, chlorinations and acid hydrolysis), and mixtures thereof.

In one aspect, the non-spherical liquid droplet comprises a liquid; and an internal solid material, the internal solid material defining the shape of the droplet; and wherein the three-phase contact angle of the liquid on the internal solid material is less than about 1°; and wherein the liquid droplet has a yield stress of between about 100 Pascal and about 1,000,000 Pascal, when measured at about 25°C; and wherein the droplet comprises less than 95 weight percent lipid material; and wherein the droplet comprises at least 1 weight percent of a benefit agent.

The droplet may comprise less than 80, or even less than 70, or even less than 60, or even less than 50, or even less than 40, or even less than 30 weight percent lipid material.

The droplet may comprise from 5, or even 10, or even 20, or even 30, or even 40, or even 50, or even 60, or even 70, or even 80, or even 90, or even up to 100 weight percent benefit agent.

The droplet liquid may comprise from 5, or even 10, or even 20, or even 30, or even 40, or even 50, or even 60, or even 70, or even 80, or even 90, or even up to 100 weight percent benefit agent.

In one embodiment, the non-spherical liquid droplet comprises a liquid; and an internal solid material, the internal solid material defining the shape of the droplet; and wherein the three-phase contact angle of the liquid on the internal solid material is less than about 1°; and wherein the liquid droplet has a yield stress of between about 100 Pascal and about 1,000,000 Pascal, when measured at about 25°C; and wherein the droplet comprises less than 95 weight percent total hydrocarbons; and wherein the droplet comprises at least 1 weight percent of a benefit agent.

The droplet may comprise less than 80, or even less than 70, or even less than 60, or even less than 50, or even less than 40, or even less than 30 weight percent hydrocarbon material.

The droplet may comprise from 5, or even 10, or even 20, or even 30, or even 40, or even 50, or even 60, or even 70, or even 80, or even 90, or even up to 100 weight percent benefit agent.

The droplet liquid may comprise from 5, or even 10, or even 20, or even 30, or even 40, or even 50, or even 60, or even 70, or even 80, or even 90, or even up to 100 weight percent benefit agent.

Lipids constitute a broad group of naturally occurring molecules that include fats, waxes, sterols, fat-soluble vitamins (such as vitamins A, D, E, and K), monoglycerides, diglycerides, triglycerides, phospholipids, and others. Lipids may be derived from an organism such as animal, fungus, micro-organism, or plant. The droplet may comprise at least 1, or even 2, or even 3, or even 4, or even 5, or even 10, or even 20, or even 30, or even 40, or even 50, or even 60, or even 70, or even 80, or even 90, or even 100 weight percent of a benefit agent.

The droplet may comprise up to 95 weight percent lipid material. The droplet may comprise less than 1, or even 2, or even 5, or even 10, or even 20, or even 30, or even 40, or even 50, or even 60, or even 70, or even 80, or even 90 weight percent lipid. The total weight of the lipid of the droplet can be wholly comprised within the liquid or the internal solid material, or may be apportioned between the liquid and the internal solid material in respective ratios, which add up to no greater than 100%, of : more than or equal to 10% and less than or equal to 90%, more than or equal to 20% and less than or equal to 80%, more than or equal to 30% and less than or equal to 70%, more than or equal to 40% and less than or equal to 60%, more than or equal to 50% and less than or equal to 50%, more than or equal to 60% and less than or equal to 40%, more than or equal to 70% and less than or equal to 30%, more than or equal to 80% and less than or equal to 20%, and more than or equal to 90% and less than or equal to 10%. In another example, the droplet may comprise a liquid that is 100% lipid and an internal solid material that is comprised of less than 100%, less than 90%, less than 80%, less than 70%, less than 60%, less than 50%, less than 40%, less than 30%, less than 20%, less than 10% lipid or contain no lipid. In another example, the internal solid material may comprise a liquid that is 100% lipid and a droplet that is comprised of less than 100%, less than 90%, less than 80%, less than 70%, less than 60%, less than 50%, less than 40%, less than 30%, less than 20%, less than 10% lipid or contain no lipid.

The remainder of the droplet may comprise non-lipid material, such as inorganic polymers; hydrocarbons; organo-compound materials; synthetic organic polymers; semisynthetic organic polymers; alkyl halides; peroxides; carbohydrates including sugars, simple starches, polysaccharides (such as starches, cellulose), pectins, gums (such as gellan and xanthan), or mixtures thereof. The droplet may also comprise non-lipidic materials such as aliphatic compounds (including paraffin, also known as alkane compounds), olefinic compounds, and acetylenic compounds; cyclic compounds which include alicyclic compounds, aromatic hydrocarbon compounds, and heterocyclic compounds including pyroles, furans, and thiazoles; alcohols including fatty alcohols; ethers; aldehydes and ketones or mixtures thereof.

Hydrocarbons are organic compounds consisting exclusively of the elements carbon and hydrogen. Hydrocarbons may be derived from oil, petroleum, coal, or natural gas. The droplet may comprise up to 95 weight percent hydrocarbon material. The droplet may comprise at least 1, or even 2, or even 3, or even 4, or even 5, or even 10, or even 20, or even 30, or even 40, or even 50, or even 60, or even 70, or even 80, or even 90, or even 100 weight percent of a benefit agent. The droplet may comprise less than 1, or even 2, or even 5, or even 10, or even 20, or even 30, or even 40, or even 50, or even 60, or even 70, or even 80, or even 90 weight percent hydrocarbon. The total weight of the hydrocarbon of the droplet can be wholly comprised with the liquid or the internal solid material, or may be apportioned between the liquid and the internal solid material in respective ratios, which add up to no greater than 100%, of : more than or equal to 10% and less than or equal to 90%, more than or equal to 20% and less than or equal to 80%, more than or equal to 30% and less than or equal to 70%, more than or equal to 40% and less than or equal to 60%, more than or equal to 50% and less than or equal to 50%, more than or equal to 60% and less than or equal to 40%, more than or equal to 70% and less than or equal to 30%, more than or equal to 80% and less than or equal to 20%, and more than or equal to 90% and less than or equal to 10%.

The hydrocarbon may comprise aliphatic compounds such as paraffin (also known as alkane compounds); olefinic compounds; acetylenic compounds; and alicyclic and aromatic hydrocarbon compounds. The remainder of the droplet may comprise non-hydrocarbon material. Said non-hydrocarbon material may comprise material including inorganic polymers; lipids; organo-compound materials; non-hydrocarbon synthetic organic polymers; non-hydrocarbon semisynthetic organic polymers; alkyl halides; peroxides; carbohydrates including sugars, simple starches, polysaccharides (such as starches, cellulose); pectins; gums (like gellan and xanthan); or mixtures thereof; heterocyclic compounds (such as pyroles, furans, and thiazoles); alcohols (such as fatty alcohols); ethers; aldehydes; ketones; and mixtures thereof.

It is noted that some organic compounds can be considered to fall into multiple groups or classes (e.g. ethers and amines). Organic compounds may be derived from living organisms such as animal, fungus, micro-organism, or plant, or from non-renewable resources such as oil, petroleum, coal, or natural gas. Organic compounds may be extracted directly from the source, possibly with purification, separation, distillation, or other process steps. Organic compounds may be synthesized or prepared by one or more chemical steps, such as by reaction, possibly involving multiple starting compounds. For example, polymers are produced from monomers during a polymerization step. Synthetic polymers may be formed by using a combination of monomers derived from renewable resources such as recently living plant or animal sources; and, monomers derived from non-renewable resources such as coal, petroleum, oil, and natural gas.

Liquid

The liquid droplet comprises a liquid (also referred to as the "droplet liquid"). The liquid can be any suitable liquid that exhibits a three-phase contact angle with the internal solid material of less than 1°. The liquid may be an aqueous liquid or an oil or an alcohol.

The droplet liquid may be an oil, even a hydrophobic oil. The oil may have a melting point of greater than 10° C, or even 5° C or even -20° C. The oil may have a melting point no greater than 25° C, or even no greater than 22.5°C, or even no greater than 20°C.

The oil may be selected from alkanes, tri- and di- and monoglycerides, saturated and unsaturated fatty acids, sterols, silicone oils, fluorinated oils, mineral oils, and mixtures thereof. Oils may be sourced from petroleum, vegetable, animal, fish or plant materials. Oils can be derived from natural oil-containing materials, or can be synthetically produced.

The droplet liquid may also be an aqueous liquid. The aqueous liquid may be an aqueous solution of surfactant, an aqueous dispersion of colloidal particles, an aqueous solution of polymer, or mixtures thereof. Suitable surfactants can include anionic, non-ionic, cationic, zwitterionic, or a mixture thereof.

The droplet liquid may also be an alcohol. Suitable alcohols may include alcohols such as ethanol, propanol, butanol, pentanol, hexanol, and octanol. Suitable alcohols may also include fatty alcohols. It should be noted that both the liquid and the internal solid material may comprise fatty alcohols. Fatty alcohols (such as stearyl alcohol) making up the internal material may be distinguished from fatty alcohols in the liquid by the fact that the fatty alcohol making up the internal solid material has a melting point no lower than 40° C while the fatty alcohol present in the droplet liquid has a melting point of greater than 10° C, or even 5° C or even -20° C, but no greater than 25° C, or even no greater than 22.5°C, or even no greater than 20°C.

Internal solid material

The internal solid material may have a yield stress of at least 10,000 Pascals, or even at least 12,500 Pascals, or even at least 15,000 Pascals. The internal solid material may have a yield stress of at most 100,000,000,000 Pascals, or even 10,000,000,000 Pascals, or even 1,000,000,000 Pascals, or even 100,000,000 Pascals, or even 10,000,000 Pascals, or even 1,000,000 Pascals. The yield stress of the internal solid material is measured at a temperature of 25°C.

The internal solid material may be porous or non-porous and may be water-soluble or water-insoluble.

FIG .3 discloses non-limiting examples of the non-spherical droplets of the present invention. The internal solid material may be porous. By "porous" is meant a solid material which comprises a void volume within the solid material. The void volume may comprise the droplet liquid, or may be completely devoid of the droplet liquid. The void volume may comprise the benefit agent. The droplet liquid (4) completely surrounds the internal solid material (14) and the distance between any point on the surface of the internal solid material (15) and the outer surface of the droplet (16) can vary from another point on the surface of the internal solid material and the outer surface of the droplet, i.e. the 'thickness' of the liquid part of the liquid droplet may vary. Alternatively the internal solid material may be non-porous. The internal solid material may be in the form of a shell (17) in which there exists a chamber (18) within the solid material. This chamber (18) may contain another material. The internal solid material may exist as a single structure, for example a single solid structure (19) within the liquid droplet or may exist as more than one structure (20). If there is more than one structure, these structures may or may not be in contact with one another within the liquid droplet. The internal solid material could be an assembly of discrete components. For example, this assembly could be comprised of a series of rod shaped solid materials (21) which are in close contact but which comprise a void volume between each other. In this instance, the internal solid material will be porous due to the void volume existing between the rod shape solid materials. Alternatively, the internal solid material may comprise a porous material (22), non-porous material (23) in which there exists no void volume, shell material (17) or a combination thereof (24).

The internal solid material may comprise an assembly of solid forms or components which in their positioning make up the overall internal shape, whether it be for example a rod or a ring-like overall shape. In one example, the shape of the internal solid material may be rod shaped, or be an assembly of rods or splines or needles that give an overall rod shape to the liquid droplet. The internal solid material in a rod shape may be porous, non-porous, be a shell, or be a tube/pipe (i.e. hollow within and open at both ends). An assembly of rods may comprise porous rods, non-porous rods, rod shaped shells, tubes/pipes, or mixtures thereof. Alternatively, the internal solid material may be comprised of spherically shaped forms or subcomponents (25), in which case the internal solid material would need to be an assembly of spherical shapes (26) which in their totality give the liquid droplet a non-spherical shape. Alternatively, the internal solid material may have a substantially flat profile (27) (i.e., comprises at least two sides that are substantially planar).

The solid material may be selected from waxes, polymeric materials, fatty materials, inorganic materials or mixtures thereof. Waxes may be sourced from petroleum, vegetable, animal, fish or plant materials. Waxes can be derived from natural wax-containing materials or may be synthetically produced.

Suitable waxes can include synthetic waxes, mineral waxes, hydrocarbon waxes, plant waxes, animal waxes, or mixtures thereof. Synthetic waxes can comprise polyethylene. Mineral waxes can include ozokerite. Hydrocarbon waxes can comprise paraffins, microcrystalline hydrocarbon waxes, petrolatum waxes, or mixtures thereof. Plant waxes can comprise castor wax, carnauba wax, or mixtures thereof. Animal waxes can comprise beeswax, spermaceti or mixtures thereof. Other suitable waxes can include those commercially available under the trade names Castrolatum™, Super White Proto-Pet™, Thixcin-R™, or mixtures thereof.

Suitable polymeric materials can include cellulose, polydimethylsiloxane, polymethylmethacrylate, polyethylene oxide, biopolymers, or mixtures thereof. Suitable biopolymers can include gums such as gellan, xanthan, and carrageenan or mixtures thereof. Other polymers include polysiloxanes, polyamides, polyamines, polycarbonates, and polyesters.

Suitable fatty materials may comprise tri- and di- and monoglycerides, saturated and unsaturated fatty acids, sterols, and fatty alcohols. Fatty alcohols (such as stearyl alcohol) making up the internal material may be distinguished from fatty alcohols in the liquid by the fact that the fatty alcohol making up the internal solid material has a melting point no lower than 40 °C. Suitable alcohols for the internal solid include cetyl alcohol, stearyl alcohol, and behenyl alcohol.

Suitable inorganic materials may include zinc oxide, zinc pyrithione calcium-based compounds, bismuth compounds, clays, or mixtures thereof. Suitable calcium-based compounds include calcium carbonate. Suitable clays include laponites, kaolinitie, montmorillonite, atapulgite, illite, bentonite, halloysite, and mixtures thereof.

Benefit agent

The liquid droplet comprises a benefit agent. The liquid droplet may comprise from 0.0001%, or even from 0.1%, or even from 1% to 50 %, or even to 40%, or even to 30%, or even to 20% by weight of the benefit agent. The benefit agent may be a liquid or a solid. If the benefit agent is solid, then it must have a three-phase contact angle of the droplet liquid on the solid benefit agent of less than 1°. If the benefit agent is liquid, then if present in the droplet liquid, the droplet liquid/benefit agent mixture must have a three-phase contact angle on the internal solid material of less than 1°. If the benefit agent is liquid, then if present in the internal solid material, there must be a three-phase contact angle of the droplet liquid on the internal solid material/liquid benefit agent mixture of less than 1°. The internal solid material/liquid benefit agent mixture can have a yield stress of at least 10,000 Pascals, or even at least 12,500 Pascals, or even at least 15,000 Pascals, and preferably a yield stress of at most 100,000,000,000 Pascals, or even 10,000,000,000 Pascals, or even 1,000,000,000 Pascals, or even 100,000,000 Pascals, or even 10,000,000 Pascals, or even 1,000,000 Pascals. The yield stress is measured at a temperature of 25°C. Alternatively, a solid benefit agent may be dissolved in a liquid, wherein the mixture comprising the liquid and dissolved solid benefit agent has a three-phase contact angle with the internal solid material of less than 1°.

The benefit agent may be fully or partly enclosed within the internal solid material or may be attached to the solid material. Alternatively, it may be present within the droplet liquid, or it may be present in both the liquid and the internal solid material.

The benefit agent may be selected from compounds useful in cleaning compositions, such as fabric or household cleaning compositions, body wash and body care compositions, hair and beauty care compositions, health care compositions, or mixtures thereof.

The benefit agent may be a surfactant. Suitable surfactants can be selected from anionic, non-ionic, zwitterionic, cationic, or mixtures thereof. If the benefit agent is a surfactant and the liquid present in the liquid droplet comprises a surfactant then the two surfactants must be different. Suitable surfactants can include lipids of biological origin such as fatty acids, acyl glycerols, glycerolphospholipids, phosphatidic acid (and salts thereof), phosphatidylethanolamine, phosphatidylcholine (lecithin), phosphatidylserine, phosphatidyllinositol, phosphatidylethanolamine, sphingolipids (e.g., ceramides), sphingomyelin, cerebroside, glucocerebroside, ganglioside, steriods, cholesterol esters (e.g., stearates), sugar-based surfactants, glucolipids, galactolipids, and combinations thereof.

The benefit agent may be transition metal catalysts; imine bleach boosters; enzymes such as amylases, carbohydrases, cellulases, laccases, lipases, bleaching enzymes such as oxidases and peroxidases, proteases, pectate lyases and mannanases; sources of peroxygen; bleach activators such as tetraacetyl ethylene diamine, oxybenzene sulphonate bleach activators such as nonanoyl oxybenzene sulphonate, caprolactam bleach activators, imide bleach activators such as N-nonanoyl-N-methyl acetamide, preformed peracids such as N,N-pthaloylamino peroxycaproic acid, nonylamido peroxyadipic acid or dibenzoyl peroxide; suds suppressing systems such as silicone based suds suppressors; brighteners; hueing agents; photobleach; fabric-softening agents such as clay, silicone, and/or quaternary ammonium compounds; flocculants such as polyethylene oxide; dye transfer inhibitors such as polyvinylpyrrolidone, poly 4-vinylpyridine N-oxide and/or co-polymer of vinylpyrrolidone, and vinylimidazole; fabric integrity components such as oligomers produced by the condensation of imidazole and epichlorhydrin; soil dispersants and soil anti-redeposition aids such as alkoxylated polyamines and ethoxylated ethyleneimine polymers; anti-redeposition components such as polyesters and/or terephthalate polymers, polyethylene glycols including polyethylene glycol substituted with vinyl alcohol and/or vinyl acetate pendant groups; perfumes; cellulosic polymers such as methyl cellulose, carboxymethyl cellulose, hydroxyethoxycellulose, or other alkyl or alkylalkoxy cellulose, and hydrophobically modified cellulose; carboxylic acid and/or salts thereof, including citric acid and/or sodium citrate; and any combination thereof.

A benefit agent can comprise perfumes, brighteners, insect repellants, silicones, waxes, flavors, vitamins, fabric softening agents, and/or skin care agents. Suitable benefit agents include silicones, enzymes, fragrances, perfumes, perfume raw materials, fragrance raw materials, deodorants, odor counteractants, malodors, essential oils, ethers, esters, ketones, alcohols, glycols, silicone hydrocarbons, cyclic hydrocarbons, aldehydes, terpines, volatile insecticides, volatile insect repellants, volatile pesticides, volatile antimicrobial agents, volatile fungicides, volatile herbicides and mixtures thereof. Skin benefit agents suitable for use in the present invention may include salicylic acid, Vitamin C, Vitamin E, Vitamin A, alpha hydroxy acids, glycolic acids, N-6 furfuryladenine, ethyl resorcinol, niacinamide, zinc pyrithione, selenium sulphide, octopirox, ketoconazole, climbazole and salicylic acid. Finasteride, protease inhibitors connected with hair growth regulation, keratinization regulators (e.g., zinc pyrithione (ZPT), tar based compositions, steroids (e.g. corticosteroids), selenium sulfide, imidazole, ketoconazole, hydroxypyridones, and naturopathic agents); octopirox, climbazole, trichogen; climbazole and zinc gluconate.

Oftentimes, benefit agents are expensive, therefore improved delivery, such as by the droplet of this invention, can help make effective use of such components.

Method of depositing benefit agent on a substrate

The present invention is also directed to a method of depositing a benefit agent onto a substrate, comprising the steps of:

i) preparing a liquor comprising an external liquid and a liquid droplet, wherein the droplet comprises:

a) a liquid;
b) an internal solid material, the internal solid material defining the shape of the droplet; and
c) a benefit agent;

wherein the three-phase contact angle of the liquid on the internal solid material is less than 1°; the droplet has a yield stress of between 100 Pascal and 1,000,000 Pascal, or even between 1000 Pascal and 10,000 Pascal when measured at 25°C; the liquid droplet is immiscible with the external liquid; the droplet has an interfacial tension with the external liquid, and the solid material exerts a yield stress which matches or exceeds the pressure exerted by the interfacial tension;
ii) contacting the liquor with the substrate;
iii) changing the interfacial tension, or changing the yield stress, or a combination of both, so that the droplet changes shape and wherein a change in shape is defined as at least a 10% increase or decrease in at least one orientation of the aspect ratio of the droplet.

The substrate can be any suitable substrate. The substrate could be fabric, fiber, skin, hair, hair follicle, mammalian tissue, tooth, non-woven, film, sheet, foil, surface of a flexible or rigid component of a product or device or package, a hard surface including a counter or shelf or floor or wall, or fixtures or devices including a toilet or sink or bathtub or shower stall or furniture, an interior or exterior surface of a vehicle including automobiles, or sporting equipment including a ball or protective gear or equipment, or personally worn or carried items including clothing or shoes or jewelry or watches or a phone or a smart phone or luggage or bags or a hat.

The liquor can be any suitable liquid. Preferred is an aqueous liquor, such as an aqueous wash liquor.

The liquid droplet, the benefit agent, and the internal solid material are the same as described above.

The liquor is contacted with the substrate. In one embodiment, the liquor is added to the substrate. In another embodiment, the substrate is added to the liquor.

Without wishing to be bound by theory, when the interfacial tension in increased or the yield stress is decreased, this shifts the balance of these two forces and so the liquid droplet changes shape to re-achieve balance of the forces. Thus, the method of the present invention could comprise the step of increasing the interfacial tension, or decreasing the yield stress or a combination of both. Alternatively, the method of the present invention could comprise the step of decreasing the interfacial tension, or increasing the yield stress of both.

The interfacial tension may be increased by attachment of the liquid droplet to a substrate. The interfacial tension may be either increased or decreased, if a surfactant is present in the external liquid, by the addition of a polymer, colloid, or other surfactant that displaces the first surfactant from its position at the droplet-external liquid interface.

The yield stress of the internal solid material may be decreased by increasing the temperature. The temperature may be increased to above 50°C. The yield stress may also be decreased by application of ultrasonic energy, either in bulk or focused , or by application of electromagnetic energy, in bulk or focused such as by use of a laser device, on all or specific parts of the solid material.

The yield stress may be increased by causing the densification of the internal solid material structure, for example by application of vibratory stresses. Means of changing the yield stress have been detailed above and apply also to here.

The liquid droplet has an aspect ratio. Without wishing to be bound by theory, the aspect ratio is determined by assigning a major and minor axis to the liquid droplet. This is achieved by fitting an artificial bounding rectangle to the liquid droplet, where the rectangle dimensions determine each axis value. The aspect ratio is then determined as the ratio of length of the major to minor axis. The method of determining the aspect ratio is described in more detail below. The shape change is defined as at least a 10% increase or decrease in the aspect ratio in at least one orientation. In one aspect, the liquid droplet may have an aspect ratio in at least one orientation of 1 prior to shape change. The liquid droplet may have an aspect ratio in at least one orientation of greater than or equal to 2, or even 5 or even 10 prior to shape change.

Method of making a liquid droplet

Another aspect of the present invention is a method for making the non-spherical liquid droplets of the present invention comprising the steps of;

i) mixing a first liquid composition comprising a molten ingredient having a yield stress of between 100 and 1,000,000 Pascals, the yield stress being measured at a temperature of 25° C and a second liquid and a benefit agent, wherein the first and second liquids and benefit agent are mixed at a temperature above 50°C to make a liquid droplet premix;
ii) preparing a channel, wherein the channel comprises a third liquid, the third liquid being immiscible with the second liquid, and wherein the third liquid flows through the channel;
iii) drawing individual droplets of the liquid droplet premix into the channel;
iv) passing the premix droplets through the channel at a temperature of 50°C or below so that the first liquid solidifies to produce liquid droplets;
v) depositing the liquid droplets into a composition comprising the third liquid, the third liquid being immiscible with the second liquid.

The liquid droplet premix comprises two separate fractions. The first fraction corresponds to the internal solid material in a molten state and the second fraction corresponds to the droplet liquid and the benefit agent. In order to form the liquid droplet, these three components exist in the droplet premix as a homogenous mixture at a temperature above 50°C. The benefit agent may be a liquid or a solid. If the benefit agent is solid, then it must have a three-phase contact angle of the liquid on the solid benefit agent of less than 1°. If the benefit agent is liquid, then when dissolved in the droplet liquid, the droplet liquid/benefit agent mixture must have a three-phase contact angle on the internal solid material of less than 1°. Alternatively, a solid benefit agent may be dissolved in a liquid, wherein the mixture comprising the liquid and dissolved solid benefit agent has a three-phase contact angle with the internal solid material of less than 1°.

In step (iv) above, this homogenous premix is drawn into the channel whilst simultaneously cooling the mixture to a temperature of 50°C or less. Suitable means of lowering the temperature could be a heat exchanger, for example a water bath or a cooling jacket. As the temperature is decreased, the first fraction (molten internal solid material) cools and solidifies.

Step (iv) may comprise the step of drawing the homogenous premix into a constriction in order to shape the droplet. As the temperature is decreased the molten internal solid material cools and solidifies in a non-spherical shape. Due to the interactive forces between the shaped internal solid material and the liquid, the droplet maintains a non-spherical shape. The interactive forces are explained in more detail above in relation to the three-phase contact angle.

The constriction may be in the form of a capillary, or one in which the droplet premix is extruded through a membrane system or one in which the droplet premix is passed through a fiber-spinning apparatus or a mold, or a mixture thereof.

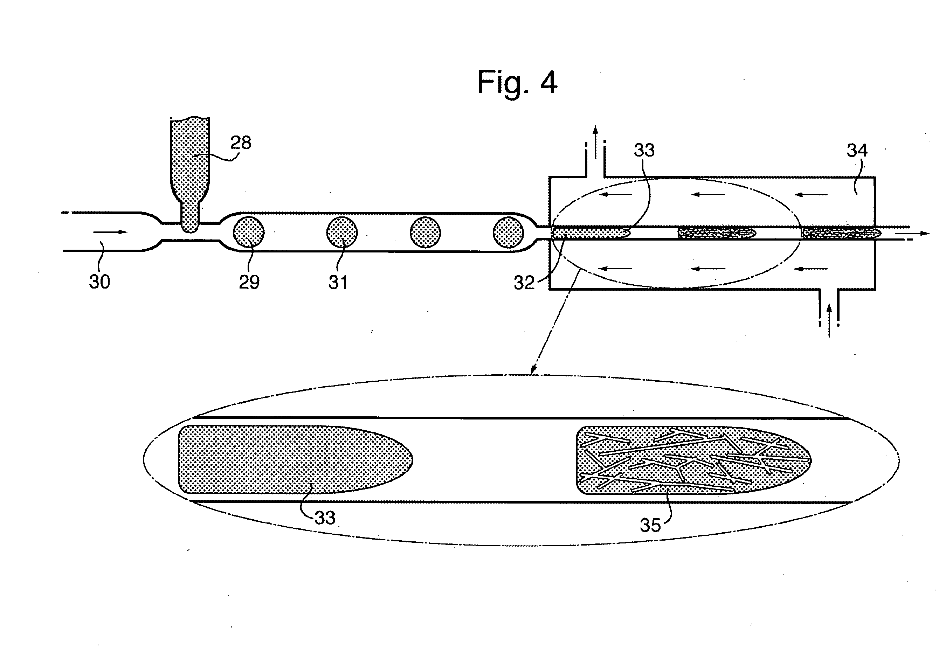

FIG. 4 shows an exemplary means to shape the liquid droplet. The droplet premix (28) is injected into the channel (29) wherein the third liquid (30) is flowing through the channel. Individual droplets of the droplet premix (29) pass into a restricted capillary zone (32) in which the droplet premix is shaped into a non-spherical shape (33). The capillary passes through a heat exchanger to lower the temperature to 50°C or below (34). As the droplets of the liquid droplet premix pass through the cooling means (34), the internal solid material solidifies (35).

EXAMPLES

Test methods

Circularity was measured by optical microscopy using a Zeiss Axiscop microscope, fitted with a 20X objective lens, available from Carl Zeiss MicroImaging Inc. in Thornwood, N.Y. A 1 mL sample of a droplet dispersion was placed on a microscope slide and positioned under the objective lens. The sample was viewed through the ocular lenses and the focus and illumination adjusted until the droplets were visually clear. An image of the individual droplet was then digitized using ImageJ image analysis program, available from National Institutes of Health in Bethesda, Maryland. Using ImageJ software, the digitized image was then analyzed using the area and perimeter analysis options to measure the droplet's two-dimensional area and perimeter. The values reported on the screen were then used to calculate the circularity using the equation given above.

Aspect ratio was measured by image analysis using a Zeiss Axiscop microscope, fitted with a 20X objective lens, available from Carl Zeiss MicroImaging Inc. in Thornwood, N.Y. A 1 mL sample of a droplet dispersion was placed on a microscope slide and positioned under the objective lens. The sample was viewed through the ocular lenses and the focus and illumination adjusted until droplets were visually clear. An image of an individual droplet was then digitized using ImageJ image analysis program, available from National Institutes of Health in Bethesda, Maryland. Using ImageJ software, the digitized image was then analyzed using the bounding rectangle analysis option. The dimensions of the bounding rectangle were then recorded from the output screen shown and used to calculate the aspect ratio by taking the major axis value and dividing it by the minor axis value.

Yield stress was measured using a TA Instruments AR2000 stress-controlled rheometer available from TA Instruments of New Castle Delaware, fitted with a 40 mm 2 degree angle cone and plate attachment.

A 0.5 gram sample was placed on the bottom plate and the temperature set to 25° C. For a liquid material the sample was poured onto the plate, while a solid sample was cut into a cylindrical shape having the diameter of the cone and a height of 1 millimeter.

The cone was lowered until the apparatus software determined the position of the sample.

The sample was heated to 60° C and mixed for 5 minutes at a shear rate of 100 s$^{-1}$.

The sample was then cooled from 60° C to 25° C at 5° C per minute while oscillating the sample with a strain of 0.1% at a frequency of 1 Hertz.

The apparatus measured and recorded the elastic modulus, G', every 10 seconds during the oscillation.

Once 25° C was reached, G' measurement and recording continued and a gradual increase in strain was conducted until reaching 100%. G' was plotted as a function of strain.

The value of G' will exhibit a constant plateau value at low strain values and the critical strain is defined as the strain at which the G' first drops below its plateau value by 20% or more.

The yield stress is then calculated as the product of the critical strain and the G' plateau value.

For example, a sample that has a G' plateau value of 10,000 Pascals and a critical strain of 0.2% has a yield stress of 20 Pa.

The three-phase contact angle was measured, using a Kruss DSA100 droplet shape analyzer that is available from Kruss Instruments of Hamburg Germany.

A flat sample of the solid to be characterized was prepared by cutting it so the surface was flat and not contaminated with dust.

The first liquid to be characterized was then placed on the flat sample of the solid at the bottom of a rectangular quartz cuvette, and the cuvette placed on the sample plate. The cuvette was then filled with the first liquid.

A droplet of the second liquid was then placed on the surface of the solid sample.

The apparatus was then used to measure the contact angle using the contact angle calculation function of the DSA1 software, available from Kruss Instruments of Hamburg Germany, that performs a best-fit of the boundary of the droplet.

The interfacial tension between the droplet and external liquid was measured using a Kruss DSA100 droplet shape analyzer that is available from Kruss Instruments of Hamburg Germany.

A syringe containing the droplet liquid was attached to the syringe holder of the instrument and lowered into a rectangular quartz cuvette containing a sample of the external liquid.

The droplet liquid was then pushed out of the syringe until a droplet formed in the external liquid. The sample was equilibrated for five minutes and then photographed using the interfacial tension function of the DSA1 software that performs a best-fit of the droplet boundary and uses that to calculate the interfacial tension between the two liquids.

Example 1

The following is an example of making a rod shaped droplet. A mixture of 70 wt% Vaseline™ brand petrolatum, 15 wt% Sigma Aldrich light mineral oil, and 15 wt% Shin Etsu silicone oil (benefit agent) was mixed in a beaker. This was heated up while being mixed until completely melted and homogeneous. A 10 millimolar solution of sodium dodecyl sulfate in water was prepared by mixing 2.9 grams of sodium dodecyl sulfate into a liter of water and mixing until a clear solution was formed.

Two Harvard Apparatus PHD 2000 syringe pumps were set to a temperature of 65°C. One syringe pump was filled with the homogenous heated mixture and the other with the sodium dodecyl sulfate composition. The pumps were connected to a Dolomite 3000436 microfluidic chip. IDEX FEP 150 micron ID tubing was connected to the outlet of the chip. The outlet tubing of the chip was surrounded with a concentric copper tube heat exchanger around the microfluidic chip's outlet tubing and its outer tube connected to the reservoir of heat exchanger fluid. The compositions were flowed through the apparatus and rod-shape droplets collected.

Alternatively, the Shin Etsu silicone oil was replaced with 15 wt% Arch Chemicals zinc pyrithione.

Example 2

The following is an example of making a rod shaped droplet. A mixture of 70 wt% Vaseline™ brand petrolatum, 15 wt% Sigma Aldrich light mineral oil, and 15 wt% Shin Etsu silicone oil (benefit agent) was mixed in a beaker. This was heated up while being mixed until completely melted and homogeneous.

IDEX FEP 150 micron ID tubing was connected to the outlet of a New Era Pump Systems metal syringe. The syringe was connected to a syringe pump. An Omega heating tape was wrapped around the syringe and set to a temperature of 61°C. The homogenous mixture was pumped through the apparatus and rod shaped droplets collected in a beaker comprising a 10 millimolar solution of sodium dodecyl sulfate in water. Alternatively, the Shin Etsu silicone oil was replaced with 15 wt% Arch Chemicals zinc pyrithione.

Example 3

Rod-shaped droplets were made as described in Example 1 above. An aqueous composition comprising 1.6 wt% linear alkyl benzene sulfonate, 0.4 wt% concentration of hydrogenated castor oil crystals, 0.07 wt% borax and 0.2 wt% NaOH. The aqueous composition had a yield stress of 1Pa. To this the rod-shaped liquid droplets were added to a concentration of 1 wt% to make a liquid droplet composition. At a yield stress of 1Pa, the aqueous composition was such that it prevented aggregation of the liquid droplets (which would give a false positive), yet was not too viscous to pump.

The liquid droplet composition was divided in half and one of the two resulting samples was heated to a temperature above 60° C for 15 minutes to melt the internal solid material. Upon melting, the rod-shaped droplets assumed a spherical shape (since the interfacial tension is no longer offset by an internal structure).

A volume of 1 ml of the composition being tested was then pushed through a 25 mm Stainless Steel Filter Holder, available from EMD Millipore Corporation in Billerica, Massachusetts, using a 1 mL Becton-Dickinson syringe available from Becton, Dickinson and Company in Franklin Lakes, New Jersey. The average mesh pore size was ∼ 550 μm. The filter mesh was removed following each test and the entire mesh imaged under a microscope to detect the amount of droplet material that was deposited.

The amount of droplet deposition was measured by optical microscopy using a Zeiss Axioscop microscope, fitted with a 4X objective lens, available from Carl Zeiss MicroImaging Inc. in Thornwood, N.Y. The entire filter mesh was placed on a microscope slide and positioned under the objective lens. The sample was viewed through the ocular lenses and the focus and illumination adjusted until the mesh was visually clear. An image of the mesh was then digitized using the ImageJ image analysis program, available from National Institutes of Health in Bethesda, Maryland.

Using ImageJ software, the digitized image was then analyzed to determine the area of droplets blocking the mesh of the filter using the Measure Particle option with the Area parameter specified as an output. Using the Summary option, the total area of droplets in the filter mesh was determined and compared for each droplet shape.

The average area of filter blockage is reported below for each shape:

Rods: 74.60 square millimeters
Spheres: 1.55 square millimeters

As can clearly be seen from the data, a much larger area of the filter mesh was blocked with rod-shaped liquid droplets than spherical liquid droplets. Thus, rod-shaped liquid droplets have much better adhesion to a substrate than spherical liquid droplets.

Example 4

A dispersion of rod-shaped droplets is produced using the above method, added to a 10 millimolar solution of sodium dodecyl sulfate surfactant containing 0.5 wt% CP-Kelco microfibrous cellulose and observed using optical microscopy with a Zeiss Axioscop microscope, fitted with a 4X objective lens, available from Carl Zeiss Micro-Imaging Inc. in Thornwood, N.Y. A 0.5 milliliter sample of the dispersion was placed on a microscope slide and positioned under the objective lens. The sample was viewed through the ocular lenses and the focus and illumination adjusted until the rods were visually clear.

A single fiber of Teflon is then placed into the external liquid and brought into contact with a rod-shaped droplet by manual manipulation. A microcapillary was then inserted into the sample field of view and used to inject deionized water into the region surrounding the rod-shaped droplet under study and increase the interfacial tension. Images of the rod-fiber pairing were then digitized using the ImageJ image analysis program, available from National Institutes of Health in Bethesda, Maryland.

Using ImageJ software, the digitized image was then analyzed to determine the area of contact between the droplet and fiber, as well as the droplet dimensions and aspect ratio, before and after increase of the interfacial tension using the Measure Particle option with the Area. parameter specified as an output.

The area of contact for each case is reported below:

> Before dilution: Contact Area = 1840 square microns, Aspect Ratio = 7
> After dilution: Contact Area = 4670 square microns, Aspect Ratio = 3

The data show that the droplet-substrate contact area significantly increases and aspect ratio significantly decreases as a result of shape change induced by increasing the interfacial tension around the rod-substrate pair.

In addition to changing contact area, the droplet is observed to wrap itself helically around the fiber substrate.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

**Claims**

1. A method of changing the shape of a liquid droplet in an external liquid wherein the liquid droplet has an aspect ratio and the shape change is defined as at least a 10% increase or decrease in the aspect ratio in at least one orientation, and preferably wherein said external liquid is a consumer goods product, wherein the droplet comprises;

   (a) a liquid, preferably wherein said liquid is an aqueous liquid or an oil, more preferably an oil, and even more preferably wherein the oil is selected from the group consisting of alkanes, tri- and di- and monoglycerides, silicone oils, mineral oils, and mixtures thereof;
   (b) an internal solid material, the internal solid material defining the shape of the droplet; preferably wherein said internal solid material is selected from waxes, preferably microcrystalline waxes, paraffins, beeswax, ozokerite, and alkylated silicone waxes; polymeric materials, preferably cellulose, polydimethylsiloxane, and biopolymers, more preferably gums, and still more preferably gums such as gellan, xanthan, and carrageenan; inorganic materials, even more preferably zinc oxide and zinc pyrithione; and mixtures thereof; and
   (c) a benefit agent; preferably wherein said benefit agent is selected from compounds useful in cleaning compositions, more preferably fabric or household cleaning compositions or body wash and body care compositions, and mixtures thereof;

   wherein the three-phase contact angle of the liquid on the internal solid material is less than 1°; the liquid droplet has a yield stress of between 100 Pascals and 1,000,000 Pascals, preferably between 1000 Pascals and 10,000 Pascals, when measured at 25 °C; and wherein the liquid droplet has an interfacial tension with the external liquid, and the solid material exerts a yield stress which matches or exceeds the pressure exerted by the interfacial tension; comprising the step of: changing the interfacial tension, or changing the yield stress, or a combination of both.

2. The method according to claim 1 comprising the step of increasing the interfacial tension, or decreasing the yield stress, of a combination of both.

3. The method according to claim 1 comprising the step of decreasing the interfacial tension, or increasing the yield stress, or a combination of both.

4. The method according to claim 1 comprising the step of contacting a substrate with the liquid droplets, followed by increasing the interfacial tension, or decreasing the yield stress, or a combination of both.

5. The method according to any of the preceding claims, wherein the droplet is non-spherical prior to changing shape.

6. The method according to any of the preceding claims, wherein the liquid droplet has in at least one orientation an aspect ratio greater than 1.0, preferably greater than or equal to 1.5, more preferably greater than or equal to about 2, still more preferably greater than or equal to 10, prior to changing shape.

7. The method according to any of the preceding claims, wherein the liquid droplet has a circularity of at least one orientation of less than 0.9.

8. The method according any of the preceding claims, wherein the interfacial tension of the droplet is increased by attachment of the liquid droplet to a substrate.

**9.** The method according to any of the preceding claims, wherein the yield stress is increased or decreased by changing the temperature or pH, and preferably wherein the temperature is increased to a temperature above 50°C.

**10.** A method for making a droplet according to any of the preceding claims, comprising the steps of:

i) mixing a first liquid composition comprising a molten ingredient having a yield stress of between 100 and 1,000,000 Pascals, the yield stress being measured at a temperature of 25° C and a second liquid and a benefit agent, wherein the first and second liquids and benefit agent are mixed at a temperature above 50°C to make a liquid droplet premix;
ii) preparing a channel, wherein the channel comprises a third liquid, the third liquid being immiscible with the second liquid, and wherein the third liquid is flowing through the channel;
iii) drawing individual droplets of the liquid droplet premix into the channel;
iv) passing the premix droplets into the channel at a temperature of 50°C or below so that the first liquid solidifies to produce liquid droplets;
v) depositing the liquid droplets into a composition comprising the third liquid, the third liquid being immiscible with the second liquid.

**Patentansprüche**

**1.** Verfahren zum Verändern der Gestalt eines Flüssigkeitströpfchens in einer externen Flüssigkeit, wobei das Flüssigkeitströpfchen ein Aspektverhältnis aufweist und die Gestaltänderung als eine mindestens 10%ige Zunahme oder Abnahme des Aspektverhältnisses in mindestens einer Richtung definiert ist, und wobei vorzugsweise die externe Flüssigkeit ein Konsumgüterprodukt ist, wobei das Tröpfchen Folgendes umfasst;

a) eine Flüssigkeit, wobei die Flüssigkeit bevorzugt eine wässrige Flüssigkeit oder ein Öl, besonders bevorzugt ein Öl ist, und noch stärker bevorzugt, wobei das Öl aus der Gruppe ausgewählt ist bestehend aus Alkanen, Tri- und Di- und Monoglyceriden, Siliconölen, Mineralölen und Mischungen davon;
b) einen internen Feststoff, wobei der interne Feststoff die Form des Tröpfchens bestimmt; vorzugsweise wobei der interne Feststoff ausgewählt ist aus Wachsen, vorzugsweise mikrokristallinen Wachsen, Paraffinen, Bienenwachs, Ozokerit und alkylierten Siliconwachsen; Polymermaterialien, vorzugsweise Cellulose, Polydimethylsiloxan und Biopolymeren, stärker bevorzugt Gummis und noch stärker bevorzugt Gummis wie Gellan, Xanthan und Carrageenan; anorganischen Materialien, noch stärker bevorzugt Zinkoxid und Zinkpyrithion; und Mischungen davon; und
c) ein Vorteilsmittel; wobei vorzugsweise das Vorteilsmittel aus Verbindungen ausgewählt ist, die in Reinigungsmitteln, stärker bevorzugt in Textil- oder Haushaltsreinigungsmitteln oder Körperwasch- und -pflegemitteln und Mischungen davon geeignet sind;

wobei der Dreiphasen-Kontaktwinkel der Flüssigkeit auf dem internen Feststoff weniger als etwa 1 ° beträgt; das Flüssigkeitströpfchen eine Streckspannung von zwischen 100 Pascal und 1.000.000 Pascal, vorzugsweise zwischen 1000 Pascal und 10.000 Pascal, gemessen bei 25 °C, aufweist; und wobei das Flüssigkeitströpfchen eine Grenzflächenspannung mit der externen Flüssigkeit aufweist und der Feststoff eine Streckspannung aufweist, die den Druck erreicht oder überschreitet, der durch die Grenzflächenspannung ausgeübt wird; umfassend den folgenden Schritt: Verändern der Grenzflächenspannung oder Änderung der Streckspannung oder eine Kombination von beiden.

**2.** Verfahren nach Anspruch 1, umfassend den Schritt des Erhöhens der Grenzflächenspannung oder des Verminderns der Streckspannung oder eine Kombination von beiden.

**3.** Verfahren nach Anspruch 1, umfassend den Schritt des Verminderns der Grenzflächenspannung oder des Erhöhens der Streckspannung oder eine Kombination von beiden.

**4.** Verfahren nach Anspruch 1, umfassend den Schritt des Kontaktierens eines Substrats mit den Flüssigkeitströpfchen, gefolgt von dem Erhöhen der Grenzflächenspannung oder dem Vermindern der Streckspannung oder eine Kombination von beiden.

**5.** Verfahren nach einem der vorangehenden Ansprüche, wobei das Flüssigkeitströpfchen vor der Veränderung der Gestalt nichtsphärisch ist.

**6.** Verfahren nach einem der vorangehenden Ansprüche, wobei das Flüssigkeitströpfchen in mindestens einer Orientierung ein Aspektverhältnis von größer als 1,0, bevorzugt größer als oder gleich 1,5, stärker bevorzugt größer als oder gleich etwa 2, noch stärker bevorzugt größer als oder gleich 10 vor dem Verändern der Form aufweist.

**7.** Verfahren nach einem der vorangehenden Ansprüche, wobei das Flüssigkeitströpfchen eine Rundheit von mindestens einer Orientierung von weniger als 0,9 aufweist.

**8.** Verfahren nach einem der vorangehenden Ansprüche, wobei die Grenzflächenspannung des Tröpfchens durch die Anheftung des Flüssigkeitströpfchens an ein Substrat erhöht wird.

**9.** Verfahren nach einem der vorangehenden Ansprüche, wobei die Streckspannung durch Verändern der Temperatur oder des pH-Werts erhöht oder vermindert wird und vorzugsweise wobei die Temperatur auf eine Temperatur über 50 °C erhöht wird.

**10.** Verfahren zum Herstellen eines Tröpfchens nach einem der vorangehenden Ansprüche, umfassend die folgenden Schritte:

i) Mischen einer ersten flüssigen Zusammensetzung, die einen geschmolzenen Inhaltsstoff mit einer Streckspannung zwischen 100 und 1.000.000 Pascal umfasst, wobei die Streckspannung bei einer Temperatur von 25 °C gemessen wird, und eine zweite Flüssigkeit und ein Vorteilsmittel, wobei die erste und die zweite Flüssigkeit und das Vorteilsmittel bei einer Temperatur oberhalb 50 °C zum Herstellen einer Flüssigkeitströpfchenvormischung gemischt werden.

ii) Herstellen eines Kanals, wobei der Kanal eine dritte Flüssigkeit umfasst, die mit der zweiten Flüssigkeit unmischbar ist und wobei die dritte Flüssigkeit durch den Kanal fließt;

iii) Ziehen von einzelnen Tröpfchen der Flüssigkeitströpfchenvormischung in den Kanal;

iv) Einleiten der Vormischungströpfchen in den Kanal bei einer Temperatur von 50 °C oder darunter, so dass sich die erste Flüssigkeit verfestigt, um Flüssigkeitströpfchen zu bilden;

v) Ablagern der Flüssigkeitstropfen in eine Zusammensetzung umfassend die dritte Flüssigkeit, wobei die dritte Flüssigkeit mit der zweiten Flüssigkeit unmischbar ist.

## Revendications

**1.** Procédé de changement de la forme d'une gouttelette de liquide dans un liquide externe, dans lequel la gouttelette de liquide a un rapport d'aspect et le changement de forme est défini en tant qu'au moins une augmentation ou une diminution de 10 % du rapport d'aspect suivant au moins une orientation, et dans lequel ledit liquide externe est de préférence un produit de consommation, dans lequel la gouttelette comprend ;

a) un liquide, où ledit liquide est de préférence un liquide aqueux ou une huile, plus préférablement une huile, et où l'huile est encore plus préférablement choisie dans le groupe constitué d'alcanes, de tri- et di- et monoglycérides, d'huiles de silicone, d'huiles minérales et de mélanges de ceux-ci ;

b) un matériau solide interne, le matériau solide interne définissant la forme de la gouttelette ; dans lequel ledit matériau solide interne est de préférence choisi parmi des cires, de préférence des cires microcristallines, des paraffines, de la cire d'abeille, de l'ozocérite et des cires de silicone alkylées ; des matériaux polymères, de préférence cellulose, polydiméthylsiloxane et biopolymères, plus préférablement des gommes, et encore plus préférablement des gommes telles que gellane, xanthane et carragahénine ; des matériaux inorganiques, encore plus préférablement de l'oxyde de zinc et de la pyrithione de zinc ; et des mélanges de ceux-ci ; et

c) un agent bénéfique ; dans lequel ledit agent bénéfique est de préférence choisi parmi des composés utiles dans des compositions nettoyantes, plus préférablement des compositions de nettoyage des tissus ou de nettoyage ménager ou des compositions de nettoyage du corps et de soin du corps, et des mélanges de ceux-ci ;

dans lequel l'angle de contact triphasique du liquide sur le matériau solide interne étant inférieur à environ 1 ° ; la gouttelette de liquide a une limite d'élasticité entre 100 Pascals et 1 000 000 Pascals, de préférence entre 1000 Pascals et 10 000 Pascals, quand elle est mesurée à 25 °C ; et dans lequel la gouttelette de liquide a une tension interfaciale avec le liquide externe, et le matériau solide exerçant une contrainte d'élasticité qui correspond à ou qui dépasse la pression exercée par la tension interfaciale ; comprenant les étapes consistant à : modifier la tension interfaciale, ou modifier la limite d'élasticité, ou une combinaison des deux.

**2.** Procédé selon la revendication 1, comprenant l'étape consistant à augmenter la tension interfaciale, ou diminuer la limite d'élasticité, ou une combinaison des deux.

**3.** Procédé selon la revendication 1, comprenant l'étape consistant à diminuer la tension interfaciale, ou augmenter la limite d'élasticité, ou une combinaison des deux.

**4.** Procédé selon la revendication 1, comprenant l'étape consistant à mettre un substrat en contact avec les gouttelettes de liquide, puis à augmenter la tension interfaciale, ou diminuer la limite d'élasticité, ou une combinaison des deux.

**5.** Procédé selon l'une quelconque des revendications précédentes, dans lequel la gouttelette est non sphérique avant de changer de forme.

**6.** Procédé selon l'une quelconque des revendications précédentes, dans lequel la gouttelette de liquide a, suivant au moins une orientation, un rapport d'aspect supérieur à 1,0, de préférence supérieur ou égal à 1,5, plus préférablement supérieur ou égal à environ 2, encore plus préférablement supérieur ou égal à 10, avant de changer de forme.

**7.** Procédé selon l'une quelconque des revendications précédentes, dans lequel la gouttelette de liquide a une circularité inférieure à 0,9 sur au moins une orientation.

**8.** Procédé selon l'une quelconque des revendications précédentes, dans lequel la tension interfaciale de la gouttelette est augmentée par fixation de la gouttelette de liquide sur un substrat.

**9.** Procédé selon l'une quelconque des revendications précédentes, dans lequel la limite d'élasticité est augmentée ou diminuée en modifiant la température ou le pH, et dans lequel la température est de préférence portée à une température supérieure à 50 °C.

**10.** Procédé de production d'une gouttelette selon l'une quelconque des revendications précédentes, comprenant les étapes consistant à :

i) mélanger une première composition liquide comprenant un ingrédient fondu ayant une limite d'élasticité entre 100 et 1 000 000 Pascals, la limite d'élasticité étant mesurée à une température de 25 °C, et un deuxième liquide et un agent bénéfique, dans lequel lesdits premier et deuxième liquides et l'agent bénéfique sont mélangés à une température supérieure à 50 °C afin de préparer un prémélange de gouttelettes de liquides ;
ii) préparer un canal, dans lequel le canal comprend un troisième liquide, le troisième liquide étant non miscible au deuxième liquide, et dans lequel le troisième liquide s'écoule à travers le canal ;
iii) aspirer des gouttelettes individuelles du prémélange de gouttelettes de liquide dans le canal ;
iv) faire passer les gouttelettes de prémélange dans le canal à une température de 50 °C ou moins afin que le premier liquide se solidifie pour produire les gouttelettes de liquide ;
v) déposer les gouttelettes de liquide dans une composition comprenant le troisième liquide, le troisième liquide étant non miscible au deuxiè-

me liquide.

# Fig. 1

# Fig. 2A

# Fig. 2B

# Fig. 2C

# Fig. 3

# Fig. 4

EP 2 909 299 B1

**EP 2 909 299 B1**

**Patent documents cited in the description**

- US 20050000028 A1